(19) **Europäisches Patentamt**

**European Patent Office**

**Office européen des brevets**

(11) Veröffentlichungsnummer: **0 270 747**
**B1**

# (12) EUROPÄISCHE PATENTSCHRIFT

(45) Veröffentlichungstag der Patentschrift:
**31.10.90**

(21) Anmeldenummer: **87112771.8**

(22) Anmeldetag: **02.09.87**

(51) Int. Cl.⁵: **F16D 13/04**, F16D 21/04

(54) **Schaltbare Reibungskupplung.**

(30) Priorität: **03.11.86 DE 3637327**

(43) Veröffentlichungstag der Anmeldung:
**15.06.88 Patentblatt 88/24**

(45) Bekanntmachung des Hinweises auf die Patenterteilung:
**31.10.90 Patentblatt 90/44**

(84) Benannte Vertragsstaaten:
**DE ES GB IT SE**

(56) Entgegenhaltungen:
**FR-A- 2 221 979**
**US-A- 4 576 264**

(73) Patentinhaber: **Carl Hurth Maschinen- und Zahnradfabrik GmbH & Co, Moosacher Strasse 36, D-8000 München 40(DE)**

(72) Erfinder: **Sacher, Christoph, Amselweg 20, D-8029 Sauerlach/Arget(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine schaltbare Reibungskupplung nach dem Oberbegriff des Hauptanspruchs.

Damit geht die Erfindung aus von einem Stand der Technik, wie er von der DE-B 20 06 984 bekannt ist. Die dort beschriebene Reibungskupplung findet weltweit insbesondere bei Bootswendegetrieben Anwendung und hat sich im praktischen Einsatz bestens bewährt. Lediglich die zum Ausschalten aufzubringende Kraft wird bisweilen als noch zu groß bezeichnet.

Von daher liegt der Erfindung die Aufgabe zugrunde, die Reibungskupplung der genannten Art so weiterzubilden, daß die erforderliche Ausschaltkraft noch weiter reduziert wird. Dabei dürfen die dafür in Frage kommenden Maßnahmen das Einschalten keinesfalls nachteilig beeinflussen.

Erfindungsgemäß wird die Aufgabe mit einer Reibungskupplung gelöst, die die kennzeichnenden Merkmale des Hauptanspruchs aufweist. Die Reduzierung der Ausschaltkraft wird durch das so mögliche Ausweichen der die Wälzkörper abstützenden Elemente ermöglicht. Mit anderen Worten: Den Wälzkörpern wird beim Ausschalten gewissermaßen der Boden zum Abstützen entzogen.

Zweckmäßige Ausgestaltungen der erfindungsgemäßen Reibungskupplung werden in den Ansprüchen 2 bis 5 aufgezeigt. Unter den im Anspruch 2 genannten Segmenten sind in Ausnehmungen der die Kupplung tragenden Welle geführte Körper zu verstehen, die in etwa die Form von Kreisring-Segmenten haben, in deren Seitenflächen die Schrägflächen eingelassen sind.

Anstelle des einen Segments oder der Segmente kann auch ein in sich geschlossener Ring verwendet werden (Anspruch 3), der jedoch von der Formgebung her und damit für die Fertigung etwas kompliziert ist. Mit den in den Ansprüchen 6 und 7 genannten Ausgestaltungen ist die Kupplung in beiden Drehrichtungen einsetzbar. Das Kennzeichen des Anspruchs 8 dient der Vermeidung oder zumindest der weitergehenden Verringerung von Schaltstößen, wie sie bei bekannten Reibungskupplungen hin und wieder bemerkbar sind. Ein hohes Maß an Betriebssicherheit wird mit den Kennzeichen der Ansprüche 9 und 10 erreicht, wobei die Ausführung nach Anspruch 10 obendrein einen Dämpfungseffekt beim Einschalten bewirkt.

Die Erfindung wird nachstehend anhand von Ausführungsbeispielen beschrieben, die in den Figuren 1 bis 14 dargestellt sind. Dabei zeigt

Fig. 1 ein Getriebe, bei dem die erfindungsgemäße Reibungskupplung anwendbar ist, in schematischer Darstellung,

Fig. 2 bis 5 die Reibungskupplung von Fig. 1 in verschiedenen Schnitten,

Fig. 6 und 7 die Lage der wesentlichen Teile der Reibungskupplung bei verschiedenen Schaltzuständen,

Fig. 8 eine Variante der Ausführung von Fig. 5,

Fig. 9 eine Variante der Ausführung von Fig. 4,

Fig. 10 eine Variante der rampenartigen Schrägflächen,

Fig. 11 ein gegenüber Fig. 1 etwas anders aufgebautes Getriebe in schematischer Darstellung, und

Fig. 12 und 13 zwei mögliche Ausführungen der Stützelemente (Segmente) für das Getriebe nach Fig. 11, und

Fig. 14 die Lage des Stützelements und der Kugeln beim Ausschalten.

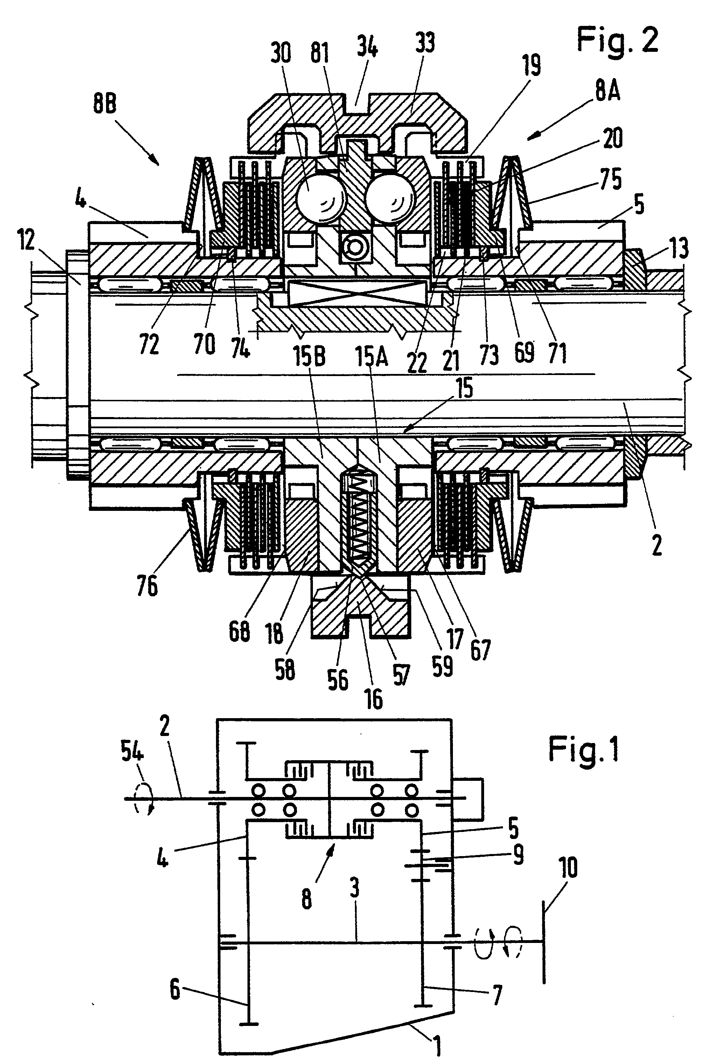

In der Fig. 1 ist stark vereinfacht ein Getriebe dargestellt, wie es insbesondere als Bootswendegetriebe angewendet wird. In einem Gehäuse (1) sind eine Antriebswelle (2) und eine Abtriebswelle (3) mit zwei Zahnrädern (6,7) gelagert. Auf der Antriebswelle (2) sind zwei Zahnräder (4,5) drehbar gelagert, die mittels einer Reibungskupplung (8), auf die noch eingegangen wird, wahlweise mit ihr gekuppelt werden können. Das Zahnrad (4) steht in Eingriff mit dem Zahnrad (6) und das Zahnrad (5) mit einem ebenfalls im Gehäuse gelagerten Zwischenrad (9), das außerdem mit dem Zahnrad (7) in Eingriff steht. Die Antriebswelle ist an ihrem aus dem Gehäuse (1) herausragenden Ende mit einem nicht dargestellten Motor verbunden und an einen Flansch (10) des aus dem Gehäuse (1) ragenden Endes der Abtriebswelle (30) kann eine weitere Welle, z.B. eine nicht dargestellte Propellerwelle, angeflanscht werden.

Die hier als Doppelkupplung ausgebildete Reibungskupplung (8) ist in Fig. 2 bis 4 im Einzelnen gezeigt. Die beiden Kupplungen sind mit 8A und 8B bezeichnet. Die Zahnräder (4,5) sind mit einer Scheibe (13) und einer Schulter (12) auf der Antriebswelle (2) axial gehalten. Zwischen den beiden Zahnrädern (4,5) ist ein Bund, der als Schaltmuffenträger (15) dient, auf die Antriebswelle (2) aufgesetzt und dort befestigt. Auf dem Schaltmuffenträger ist eine Schaltmuffe (16) längsverschiebbar geführt. Sie ist auf dem Schaltmuffenträger mit Stiften (87), die in Nuten hineinragen, oder mit anderen Mitteln gegen Drehung gesichert. Beiderseits des Schaltmuffenträgers ist je ein Lamellenträger (17,18) mit je einer Reibfläche (67,68) drehbar zentriert. Der Außendurchmesser der Lamellenträger (17,18) entspricht dem Außendurchmesser des Schaltmuffenträgers. Die Lamellenträger (17,18) sind mit Aussparungen (19) (Schlitzen) zur Aufnahme der Außenverzahnung von sogenannten Außenlamellen (20) versehen. Die Außenlamellen (20) wirken mit sogenannten Innenlamellen (21) zusammen, die mit ihrer Innenverzahnung in eine entsprechende Außenverzahnung (22) der Zahnräder (4, 5) eingreifen. Die so gebildeten Lamellenpakete werden axial nach außen von je einem Druckring (69,70) abgestützt, die mit axialem Spiel neben den Innen- (21) und Außenlamellen (20) angeordnet sind. Das Spiel wird einerseits begrenzt durch eine von den Zahnrädern (4,5) gebildete Schulter (71,72) und andererseits von je einem Sprengring (73,74) od.dgl.. Die Druckringe sind von Tellerfedern (75,76) im Sinne des Einkuppelns belastet. Die Sprengringe sind so angeordnet, daß die Lamellen von dem Druckring nicht zusammengepreßt werden, wenn sich die Lamellenträger (17,18) im Zustand des Entkuppelns befinden. In dem Schaltmuffenträger (15) sind im Bereich einer Zentrierung (78) für die Lamellenträger (17,18) mehrere Aussparungen (77) so vorgesehen, daß sie parallel zur Rotationsachse gerichtet sind. Vorsprünge (79) an den Lamellenträgern (17,18) ragen mit Spiel in diese Aussparungen, die als Anschlag für den betreffenden Lamellenträger (17,18) wirken, der sich so nur über einen begrenzten Winkel drehen kann.

Der zweckmäßigerweise aus zwei Hälften (15A,15B) zusammengesetzte Schaltmuffenträger (15) weist Kammern (80) auf, in die Segmente (81) eingesetzt sind. Die Segmente (81) werden in Drehrichtung (54) der Antriebswelle (2) von Federn (83) gegen eine Wand (84) der Kammern (80) gedrückt. Eine radial aus jedem Segment (81) vorstehende Nase (85) ragt in eine axiale Nut (86) der Schaltmuffe (16). Die Segmente (81) sind an ihren den Lamellenträgern (17, 18) zugewendeten Seiten mit je einer Einfräsung (27) versehen, die zur besagten Seite eine rampenartige Schrägfläche (28) bildet und eine Bodenfläche (29) aufweist. Die Lamellenträger (17,18) sind gegenüber den genannten Einfräsungen (27) mit entsprechenden Einfräsungen (24) versehen, die ebenfalls eine rampenartige Schrägfläche (25) bilden und eine Bodenfläche (26) aufweisen. In den Einfräsungen (24, 27) und somit zwischen den Lamellenträgern (17,18) und den Segmenten (81) liegt jeweils eine Kugel (30), die in einer entsprechenden Bohrung (82) im Schaltmuffenträger (15) geführt ist. Wenn ein Lamellenträger, z.B. (18), relativ zum Schaltmuffenträger (15) verdreht wird, dann können die Kugeln (30) auf die als Rampen dienenden jeweiligen Schrägflächen (25) auflaufen und dabei den Lamellenträger (18) vom Schaltmuffenträger (15) fortdrücken und über die Reibflächen (68) die Lamellen (20,21) zusammenpressen. Dadurch wird das Zahnrad (4) über die Tellerfedern (76), den Druckring (70), die Lamellen (20,21), den Lamellenträger (18), die betreffenden Kugeln (30), die Segmente (81) und den Schaltmuffenträger (15) mit der Antriebswelle (2) gekuppelt. Da die Kugeln (30) beim Einkuppeln auf die Rampen auflaufen, benötigt der Lamellenträger für seine Axialbewegung eine Beweglichkeit in Umfangsrichtung. Da andererseits die Aussparungen (77) in Verbindung mit den Vorsprüngen (79) als Anschlag diese Beweglichkeit begrenzt, dienen sie auch als Anschlag für die Axialbewegung. Beim Einkuppeln drückt der jeweilige Lamellenträger (17,18) die Lamellen (20, 21) gegen die federnd nachgebenden Druckringe (69,70). Die maximale Reibungskraft und damit das maximal übertragbare Drehmoment hängt somit von der Spannung der Tellerfedern (75,76) ab.

Die Lamellenträger (17,18) werden mit haarnadelartig gebogenen Rückholfedern (31) so an den Schaltmuffenträger (15) gedrückt, daß die Kugeln (30) nicht aus den Einfräsungen (24,27) herausfallen können. Aus Montagegründen sind sie außen an den Lamellenträgern (17,18) angeordnet. Zum Einhängen der Federn (31) sind bei (32) nicht dargestellte Bohrungen in den Lamellenträgern (17, 18) vorhanden. Durchbrüche (37) in der Schaltmuffe (16) ermöglichen die erforderlichen Bewegungen der Rückholfedern (31).

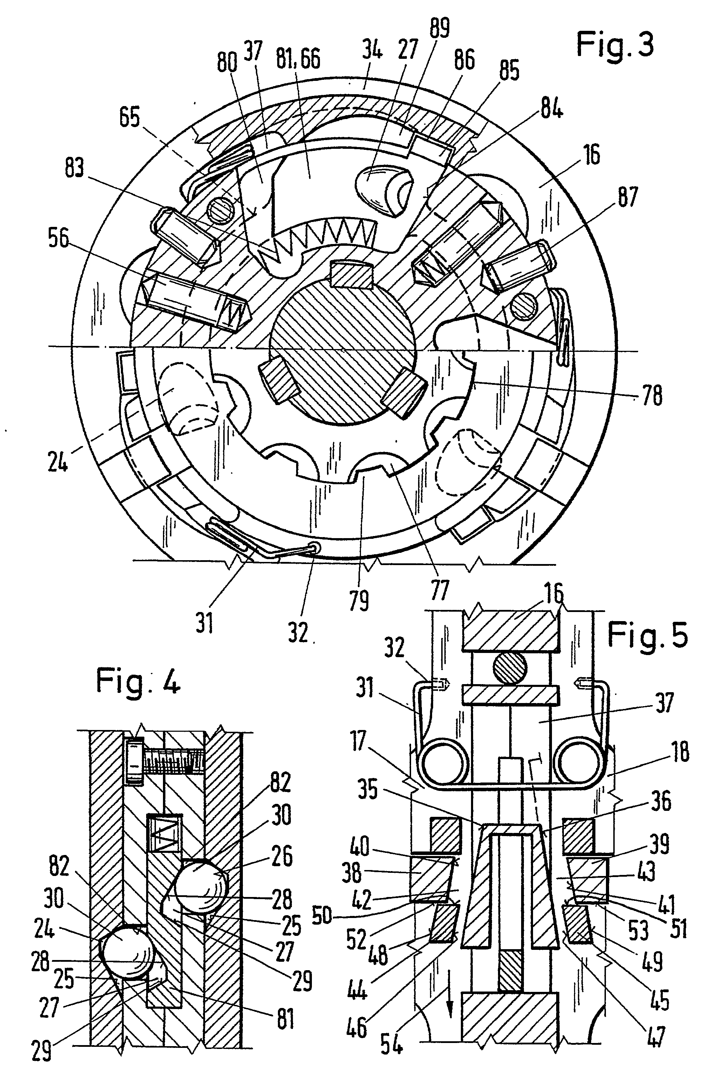

Die Schaltmuffe (16) besteht aus einem Muffenkörper (33), der außen am Umfang mit einer Ringnut (34) für eine nicht gezeichnete Schaltgabel versehen ist. Am inneren Umfang ist der Muffenkörper stirnseitig mit zwei nach der Mitte hin zusammenlaufenden schrägen Flächen versehen, die Initialflächen (35,36) (Fig.4) genannt werden. Wenn die als Rampe für die Wälzkörper dienenden Schrägflächen (25) der Lamellenträger in eine bestimmte Umfangsrichtung, die Einfräsung (24) erweiternd (vertiefend), geneigt sind, dann verlaufen die Initialflächen (35,36) in der gleichen Richtung zur Mittelebene (Rotationsebene) des Muffenkörpers (33) zusammen. In einem axialen Abstand von den Initialflächen (35,36) sind am Muffenkörper Stege (38, 39) vorgesehen, die auf der den Initialflächen zugekehrten Seite mit diesen parallele Gegenflächen (40,41) bilden. Der Muffenkörper (33) und die Stege (38,39) bilden so nach innen offene Lücken (42,43). Auf dem Umfang der Lamellenträger (17,18) sind Zähne (44,45) vorgesehen, die auf der der Schaltmuffe (16) zugekehrten Seite mit je einer sogenannten Initialflanke (46,47) versehen sind, die zu den Initialflächen (35,36) am Muffenkörper (33) parallel liegen. Auf der anderen Seite ist der Zahn mit einer Gegenflanke (48,49) versehen, die parallel liegt zu der jeweils zugekehrten Gegenfläche am Steg. In axialer Richtung sind die Lücken (42,43) breiter als die Zähne (44,45). Etwa in einer durch die Drehachse gelegten Ebene sind auf der dem Steg zugewendeten Seite die Zähne mit einer Anschlagfläche (50,51) versehen, die etwa rechtwinklig zur Rotationsebene (Rotationsrichtung) gerichtet ist. Auf der den Zähnen zugekehrten Seite sind die Stege (38,39) mit einer Anschlagfläche (52,53) versehen, die ebenfalls etwa rechtwinklig zur Rotationsebene gerichtet ist.

Im Schaltmuffenträger (15) ist ein von einer Feder belasteter Arretierstift (56) radial verschiebbar geführt. In der Mitte des Muffenkörpers (33) ist eine passende Rastkerbe (57) zum Arretieren der Schaltmuffe (16) im ausgeschalteten Zustand vorgesehen. An den Stirnseiten der Schaltmuffe (16) befinden sich zwei nach der Seite offene, d.h. also halbe, Rastkerben oder Schrägflächen (58,59) zum Fixieren der beiden Einschaltzustände. Der Arretierstift (56) und die Schrägflächen (58,59) unterstützen den Einschaltvorgang.

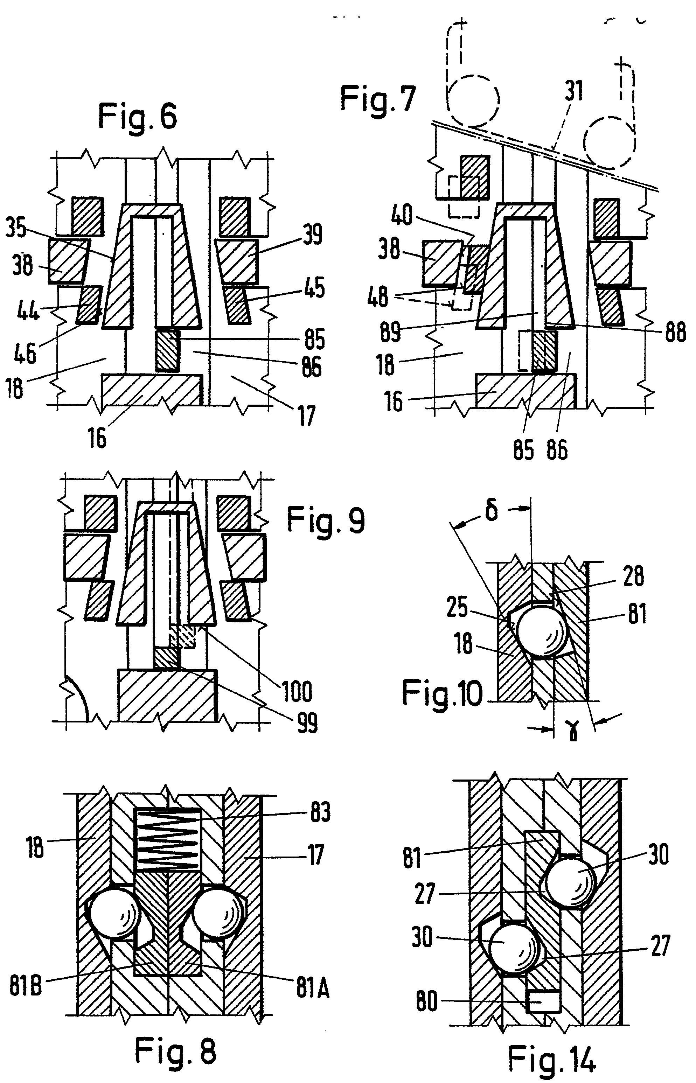

Die Wirkungsweise der Kupplung ist wie folgt. Es sei angenommen, daß sich die Antriebswelle (2) in Fig. 1 und 2 von oben über vorne nach unten dreht. Das entspricht einer Bewegung der Schaltmuffe (16) in Pfeilrichtung (54). Fig. 5 zeigt die Schaltmuffe (16) und die Lamellenträger (17,18) im ausgeschalteten Zustand (Neutralstellung). Die Lamellenträger (17,18) werden von den Rückholfedern (31) gegen den Muffenträger (15) gedrückt, die Kugeln (30) liegen in den tiefsten Punkten der Einfräsungen (24) in den Lamellenträgern (17,18). Eine Relativbewegung zwischen der Schaltmuffe (16) und den Lamellenträgern (17,18) wird durch die Anschlagflächen (50,51,52,53) der Zähne (44,45) und der Stege (38,39) verhindert. Soll die linke Kupplung eingeschaltet werden, d.h. das Zahnrad (4) mit der Antriebswelle (2) gekuppelt werden, dann wird die Schaltmuffe (16) nach links im Sinne der Fig. 1, 2 und 5 verschoben (Fig.6). Dabei bleibt die Sperre von Steg (39) und Zahn (45) auf der rechten Seite erhalten, aber auf der linken Seite wird die Sperre zwischen dem Steg (38) und dem Zahn (44) aufgehoben. Unmittelbar danach berührt die Initialfläche (35) die Initialflanke (46) (Fig.7) und schiebt den Lamellenträger (18) etwas nach links. Dadurch wird ein "Vorkuppeln" erzielt, d.h. das Lüftungsspiel zwischen den Lamellen wird beseitigt und die somit in Berührung kommenden Innen- (21) und Außenlamellen (20) verdrehen den Lamellenträger entgegen der Richtung des Pfeils (54) relativ zur Schaltmuffe (16). Dadurch laufen die Kugeln (30) auf die Rampen der flachen Schrägflächen (25) auf und pressen die Lamellen zusammen, wodurch das Einkuppeln beendet ist. Während des ganzen Vorganges drücken die Federn (83) die Segmente (81) gegen die Wände (84) im Schaltmuffenträger (15) und die Nasen (85) bleiben in den Nuten (86).

Zum Ausschalten wird die Schaltmuffe (16) nach rechts bewegt. Dabei stößt die Gegenfläche (40) an die Gegenflanke (48), und der Lamellenträger (18) wird ebenfalls nach rechts bewegt. Dabei wird der Lamellenträger (18) zunächst vom Schaltmuffenträger (15) über die Wälzkörper (30) mitgenommen. Sobald die Nasen (85) jedoch eine Kante (88) an der Einmündung von in Umfangsrichtung verlaufenden Nuten (89) in die Nuten (86) erreicht haben, weichen die Segmente (81) unter dem von den Kugeln (30) aufgebrachten Druck gegen die Kraft der Federn (83) aus: den Kugeln (30) wird gewissermaßen der Boden entzogen, sie fallen in die tiefsten Punkte der Einfräsungen (27) (Fig.14). Unterstützt durch die Neigung der Gegenflächen (40) und der Gegenflanken (48) sowie durch die Rückholfedern (31) kehrt der Lamellenträger (18) in seine ursprüngliche Lage zurück, die Pressung zwischen den Lamellen wird dabei vollends aufgehoben und die Lücken (42) nehmen wieder die Stege (38) auf.

Wichtig für den vorstehend beschriebenen Vorgang des Einschaltens ist, daß die Nasen (85) der Segmente (81) in den Nuten (86) einen Verriegelungseffekt bewirken, d.h. daß beim Einschalten und im eingeschalteten Zustand die Segmente (81) nicht ausweichen und die Kugeln (30) sich somit an einem starren Teil abstützen können. Erst während des Ausschaltvorganges wird diese Verriegelung der Segmente (81) aufgehoben.

Es ist jedoch möglich, die Nasen (85) schmäler zu machen als die Nuten (86). In Fig. 9 ist eine solche Nase mit (99) bezeichnet. Bei dieser Ausführung werden die Segmente (81) beim Einschalten gegen die Kraft der Federn (83) so weit zurück gedrückt, bis die Nasen (99) an der Nutwand (100) anliegen. Dadurch wird ein Dämpfungseffekt erzielt, der ein weicheres Einschalten bewirkt. Die Verriegelung im eingeschalteten Zustand ist auch bei dieser Ausführung gegeben.

Anstatt, wie in Fig. 4 gezeigt, die Einfräsungen (27) für beide Kupplungen (8A, 8B) im selben Segment (81) anzuordnen, können auch zwei Segmente (81A, 81B) nebeneinander angeordnet sein, von denen das eine (81A) mit dem Lamellenträger (17) der einen Kupplung (8A) und das andere (81B) mit dem Lamellenträger (18) der anderen Kupplung (8B) zusammenwirkt (Fig.8). Dabei kann die Feder (83), wie dargestellt, auf beide Segmente (81A, 81B) wirken, oder es wird für jedes Segment (81A, 81B) eine eigene Feder vorgesehen.

Bei einer etwas anderen Gestaltung der Kammern (80) können die Segmente (81,81A,81B) jeweils über in Fig. 3 mit unterbrochenen Linien angedeutete Stege (65) miteinander verbunden sein. Die so entstehenden Ringteile (66) erleichtern zwar die Montage, wegen des erforderlichen Freigangs der Arretierstifte (56) weisen sie jedoch eine komplizierte Formgebung auf. Alle vorstehend und noch im folgenden gemachten Aussagen über die Segmente, insbesondere ihre Einfräsungen bzw. Schrägflächen, ihre Nasen und Federn, gelten sinngemäß auch für die Ringteile.

Die Schrägflächen (25) in den Lamellenträgern (17,18) und die Schrägflächen (28) in den Segmenten (81) müssen nicht, wie in Fig. 4 gezeigt, parallel zueinander verlaufen. Sie können, wie in Fig. 10 gezeigt, zur Optimierung der Ein- und Ausschaltkräfte verschiedene Neigungswinkel $\gamma$, $\delta$ aufweisen, wobei der Winkel $\gamma$ im Segment (81) so klein wie möglich und der Winkel $\delta$ im Lamellenträger so groß wie möglich gewählt werden soll.

Die vorstehend beschriebenen Kupplungsvarianten nach den Figuren 1 bis 9 sind auf solche Anwendungsfälle bezogen, bei denen immer nur die eine Drehrichtung (54) vorliegt. Für Anwendungsfälle mit zwei verschiedenen Drehrichtungen sind kleine Abänderungen erforderlich.

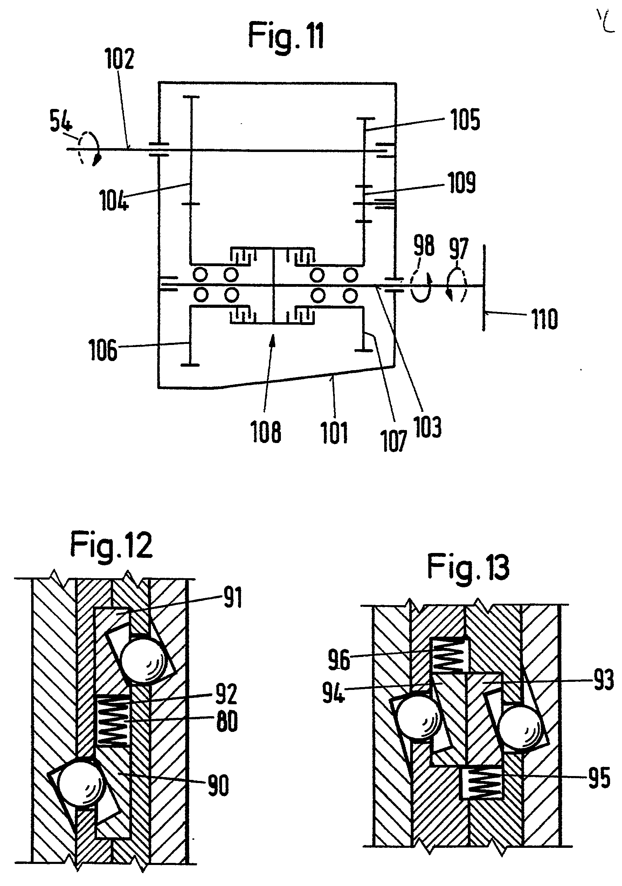

In der Fig. 11 ist stark vereinfacht ein entsprechendes Getriebe dargestellt, wie es ebenfalls insbesondere bei Bootswendegetrieben angewendet wird. In einem Gehäuse (101) sind eine Antriebswelle (102) mit zwei Zahnrädern (104,105) sowie eine Abtriebswelle (103) gelagert. Auf der Abtriebswelle (103) sind zwei Zahnräder (106,107) drehbar gelagert, die mittels einer Reibungskupplung (108) wahlweise mit ihr gekuppelt werden können. Das Zahnrad (106) steht in Eingriff mit dem Zahnrad (104) und das Zahnrad (107) mit einem ebenfalls im Gehäuse gelagerten Zwischenrad (109), das außerdem mit dem Zahnrad (105) in Eingriff steht. Die Antriebswelle ist an ihrem aus dem Gehäuse (101) herausragenden Ende mit einem nicht dargestellten Motor verbunden, von dem sie in Pfeilrichtung (54) angetrieben wird, und an einen Flansch (110) des aus dem Gehäuse (101) ragenden Endes der Abtriebswelle (103) kann eine weitere Welle, z.B. eine nicht dargestellte Propellerwelle, angeflanscht werden.

Die Reibungskupplung (108) entspricht im Prinzip der Reibungskupplung (8). Weil das Zahnrad (107) jedoch wegen des Zwischenrades (109) in der entgegengesetzten Drehrichtung dreht wie das Zahnrad (106), müssen die Segmente anders ausgebildet werden.

Ein Beispiel dafür ist in Fig. 12 gezeigt. In der Kammer (80) sind zwei Segmente (90,91) angeordnet, zwischen denen eine Druckfeder (92) eingelegt ist. Die Schrägflächen (28) der Segmente (90,91) verlaufen in derselben richtung, ebenso die Schrägflächen (25) in den Lamellenträgern (17,18). Die Wirkungsweise der Segmente (90,91) ist dieselbe wie die der Segmente (81), unterschiedlich ist - außer der Richtung der Schrägflächen - nur, daß sich die Druckfedern (92) nicht direkt am Schaltmuffenträger (15) abstützen, sondern über das jeweils andere Segment.

Ein anderes Beispiel ist in Fig. 13 gezeigt. Ähnlich wie in Fig. 8 sind hier zwei mit (93,94) bezeichnete Segmente nebeneinander angeordnet, denen jeweils eine Druckfeder (95,96) zugeordnet ist. Wegen der unterschiedlichen Drehrichtungen (97,98) sind die Druckfedern (95,96) entgegengesetzt wirkend angeordnet. Die Wirkungsweise der Segmente (93,94) ist wieder dieselbe wie die der Segmente (81).

Begriffsliste

1 Gehäuse
2 Antriebswelle
3 Abtriebswelle
4 Zahnrad
5 Zahnrad
6 Zahnrad
7 Zahnrad
8 Reibungskupplung
8A, 8B Kupplung
9 Zwischenrad
10 Flansch
11
12 Scheibe
13 Schulter
14
15 Schaltmuffenträger
15A, 15B Hälften von 15
16 Schaltmuffe
17 Lamellenträger
18 Lamellenträger
19 Aussparung
20 Außenlamelle
21 Innenlamelle
22 Außenverzahnung
23
24 Einfräsung
25 Schrägfläche
26 Bodenfläche
27 Einfräsung
28 Schrägfläche
29 Bodenfläche
30 Kugel
31 Rückholfeder
32 Bohrung
33 Muffenkörper
34 Ringnut
35 Initialfläche
36 Initialfläche
37 Durchbruch
38 Steg
39 Steg
40 Gegenfläche
41 Gegenfläche
42 Lücke
43 Lücke
44 Zahn
45 Zahn
46 Initialflanke
47 Initialflanke
48 Gegenflanke
49 Gegenflanke
50 Anschlagfläche
51 Anschlagfläche
52 Anschlagfläche
53 Anschlagfläche
54 Drehrichtung
55
56 Arretierstift
57 Rastkerbe
58 Schrägfläche
59 Schrägfläche
60
61
62
63
64
65 Steg
66 Ringteil
67 Reibfläche
68 Reibfläche
69 Druckring
70 Druckring
71 Schulter
72 Schulter
73 Sprengring
74 Sprengring
75 Tellerfeder
76 Tellerfeder
77 Anssparung
78 Zentrierung
79 Vorsprung
80 Kammer
81 Segment; 81A, 81B Segment
82 Bohrung
83 Feder
84 Wand
85 Nase
86 Nut
87 Stift
88 Kante
89 Nut
90 Segment
91 Segment
92 Druckfeder
93 Segment
94 Segment
95 Druckfeder
96 Druckfeder
97 Drehrichtung
98 Drehrichtung
99 Nase
100 Nutwand
101 Gehäuse
102 Antriebswelle
103 Abtriebswelle
104 Zahnrad
105 Zahnrad
106 Zahnrad
107 Zahnrad
108 Reibungskupplung
109 Zwischenrad
110 Flansch
$\gamma$ Neigungswinkel von 28
$\delta$ Neigungswinkel von 25

## Patentansprüche

1. Schaltbare Reibungskupplung, insbesondere für Zahnradgetriebe, mit mindestens einem axial verschiebbaren Reibring (Lamellenträger 17, 18), der zu einer Kupplungshälfte gehört, der über Kuplungsreibflächen (67, 68) und Lamellen (21, 22) mit der anderen Kupplungshälfte zusammenwirkt und der sich zum Erzeugen einer vom Drehmoment abhängigen Anpreßkraft mittels zur Rotationsebene geneigten Schrägflächen (25) über Wälzkörper (Kugeln 30) an Schrägflächen (28) der zu kuppelnden Welle (2) abstützt, und mit einer auf einem Bund (Schaltmuffenträger 15) der zu kuppelnden Welle (2) axial verschiebbar gelagerten Schaltmuffe (16), wobei die Schaltmuffe (16) und der Reibring (Lamellenträger 17, 18) mit mindestens zwei Zähnen (44, 45) und zugehörigen annähernd in Umfangsrichtung weisenden Nuten (42, 43) ineinandergreifen, wobei Zähne (44, 45) und Nuten (42, 43) mit beim Ein- und Ausschalten axial aufeinanderdrückenden Flächen (35, 46; 36, 47; 40, 48; 41, 49) versehen sind, von denen mindestens die beim Ausschalten aufeinanderdrückenden Flächen (40, 48; 41, 49) entgegen den geneigten Schrägflächen (25) zur Rotationsebene winklig gerichtet sind, dadurch gekennzeichnet, daß

a) die wellenseitigen Schrägflächen (28) an mindestens einem relativ zur Welle (2) verdrehbaren Element (81; 66; 90, 91; 93, 94) angebracht sind,

b) das mindestens eine verdrehbare Element (81; 66; 90, 91; 93, 94) in einer Ausnehmung (Kammer 80) des Wellenbundes (Schaltmuffenträger 15) geführt und mittels in Drehrichtung (54) der Welle (2) wirkender, mittelbar oder unmittelbar am Wellenbund (Schaltmuffenträger 15) abgestützter Federkraft (83, 92, 95, 96) beaufschlagt und an einen Anschlag in der Ausnehmung (Kammer 80) anlegbar ist,

c) die Wälzkörper (Kugeln 30) zwischen den Schrägflächen (25, 28) in Axialbohrungen (82) des Wellenbundes (Schaltmuffenträger 15) geführt sind, und

d) das mindestens eine verdrehbare Element (81; 66; 90 91, 93, 94) beim Einschalten der Kupplung in seiner Neutralstellung verriegelt ist und beim Ausschalten der Kupplung entriegelt wird, während sich der zugehörige Reibring (17, 18) noch im Reibeingriff befindet.

2) Reibungskupplung nach Anspruch 1, dadurch gekennzeichnet, daß die verdrehbaren Elemente als je mindestens eine Schrägfläche (28) aufweisende Segmente (81;90,91;93,94) ausgebildet sind.

3) Reibungskupplung nach Anspruch 1, dadurch gekennzeichnet, daß das mindestens eine verdrehbare Element ein alle Schrägflächen (28) aufweisendes Ringteil (66) ist.

4) Reibungskupplung nach einem der Ansprüche 1 bis 3, die als Doppelreibungskupplung ausgebildet ist, dadurch gekennzeichnet, daß jedes verdrehbare Element zwei Schrägflächen (28) aufweist, von denen jeweils die eine der einen Kupplung (8A) und die andere der anderen Kupplung (8B) zugeordnet ist.

5) Reibungskupplung nach Anspruch 1, die als Doppelreibungskupplung ausgebildet ist, dadurch gekennzeichnet, daß in jeder Ausnehmung (Kammer 80) zwei unabhängig voneinander verdrehbare Elemente (81A,81B;66) angeordnet sind, von denen jeweils das eine der einen (8A) und das andere der anderen Kupplung (8B) zugeordnet ist.

6) Reibungskupplung nach Anspruch 5, dadurch gekennzeichnet, daß in einer Ausnehmung (Kammer 80) zwei verdrehbare Elemente (Segmente 90,91) in Umfangsrichtung hintereinander liegend angeordnet sind und die Federkraft von einer zwischen den beiden verdrehbaren Elementen (Segmenten 90,91) angeordneten Druckfeder (92) aufgebracht wird.

7) Reibungskupplung nach Anspruch 5, dadurch gekennzeichnet, daß in einer Ausnehmung (Kammer 80) zwei verdrehbare Elemente (93,94) nebeneinander liegend angeordnet sind und jedem dieser Elemente (93,94) eine eigene Druckfeder (95,96) zugeordnet ist, die beide Elemente in entgegengesetzter Richtung beaufschlagen.

8) Reibungskupplung nach einem der Ansprüche 1 bis 7, dadurch gekennzeichnet, daß die Schrägflächen (28) an den verdrehbaren Elementen (81;66;90,91;93,94) eine geringere Neigung zur Rotationsebene haben als die Schrägflächen (25) des Reibringes (Lamellenträger 17,18).

9) Reibungskupplung nach Anspruch 1, gekennzeichnet durch an den verdrehbaren Elementen radial vorstehende Nasen (85), die zur Verriegelung bei eingeschalteter Kupplung (8) in axiale Nuten (86) der Schaltmuffe (16) ragen, deren lichte Weite der Breite der Nasen (85) entspricht.

10) Reibungskupplung nach Anspruch 1, gekennzeichnet durch an den verdrehbaren Elementen vorstehende Nasen (99), die zur Verriegelung bei eingeschalteter Kupplung (8) in axiale Nuten (86) der Schaltmuffe (16) ragen, deren lichte Weite erheblich größer als die Breite der Nasen (99) ist.

## Revendications

1. Embrayage à friction, notamment pour transmissions par engrenages, avec au moins un anneau de friction susceptible d'être déplacé axialement (support de lamelles 17, 18) qui fait partie d'une moitié de l'embrayage et qui, par l'intermédiaire de surfaces de friction d'embrayage (67, 68) et de lamelles (21, 22) coopère avec l'autre moitié de l'embrayage, tandis que pour obtenir un effort d'application dépendant du couple, cet anneau prend appui au moyen de surfaces obliques (25) inclinées par rapport au plan de rotation et par l'intermédiaire de corps roulants (billes 30), contre des surfaces obliques (28) de l'arbre à embrayer (2), et avec un manchon de commande (16) monté de façon à pouvoir se déplacer axialement sur un collet (support du manchon de commande 15) de l'arbre à embrayer (2), le manchon de commande (16) et l'anneau de friction (support de lamelles 17, 18) venant en prise l'un dans l'autre avec au moins deux dents (44, 45) et des gorges (42, 43) orientées approximativement en direction périphérique, les dents (44, 45) et les gorges (42, 43) étant munis de surfaces (35, 46; 36, 47; 40, 48; 41, 49) se pressant axialement les unes contre les autres lors de l'embrayage et du débrayage, au moins celles de ces surfaces (40, 48; 41, 49) qui se pressent les unes contre les autres lors du débrayage, étant orientées par rapport au plan de rotation, selon un angle opposé à celui des surfaces obliques inclinées (25), embrayage à friction caractérisé en ce que:

a) les surfaces obliques côté arbre (28) sont rapportées sur au moins un élément (81; 66; 90, 91; 93, 94) susceptible de tourner par rapport à l'arbre (2),

b) l'élément éventuellement unique susceptible de tourner (81; 66; 90, 91; 93, 94) est guidé dans un évidement (chambre 80) du collet de l'arbre (support du manchon de commande 15) et il est sollicité par l'action d'un ressort (83, 92, 95, 96) prenant appui indirectement ou directement sur le collet de l'arbre (support 15 du manchon de commande et agissant dans le sens de rotation (54) de l'arbre (2), et cet élément est susceptible d'être appliqué contre une butée dans l'évidement (chambre 80),

c) les corps roulants (billes 30) entre les surfaces obliques (25, 28) sont guidés dans des perçages axiaux (82) du collet de l'arbre (support 15 du manchon de commande

d) l'élément éventuellement unique susceptible de tourner (81; 66; 90, 91; 93, 94) est verrouillé dans sa position neutre lors de l'embrayage et est déverrouillé lors du débrayage, tandis que l'anneau de friction correspondant (17, 18) se trouve encore en prise de friction.

2. Embrayage à friction selon la revendication 1, caractérisé en ce que les éléments susceptibles de tourner sont réalisés sous la forme de segments (81; 90, 91; 93, 94) comportant chacun une surface oblique (28).

3. Embrayage à friction selon la revendication 1, caractérisé en ce que l'élément éventuellement unique susceptible de tourner est une pièce annulaire (66) comportant toutes les surfaces obliques (28).

4. Embrayage à friction selon une des revendications 1 à 3, qui est réalisé sous la forme d'un embrayage à friction double, caractérisé en ce que chaque élément susceptible de tourner comporte deux surfaces obliques (28) dont l'une est respectivement associée à l'un (8A) des embrayages, tandis que l'autre est associée à l'autre embrayage (8B).

5. Embrayage à friction selon la revendication 1, qui est réalisé sous la forme d'un embrayage à friction double, caractérisé, en ce que dans chaque évidement (chambre 80) sont disposés deux éléments susceptibles de tourner (81A, 81B; 66) indépendants l'un de l'autre, dont l'un est respectivement associé à l'un (8A) des embrayages, tandis que l'autre est associé à l'autre embrayage (8B).

6. Embrayage à friction selon la revendication 5, caractérisé en ce que, dans un évidement (chambre 80) deux éléments susceptibles de tourner (segments 90, 91) sont placés l'un derrière l'autre en direction périphérique, et l'action de ressort est appliquée par un ressort de pression (92) disposé entre les deux éléments susceptibles de tourner (segments 90, 91).

7. Embrayage à friction selon la revendication 5, caractérisé en ce que, dans un évidement (chambre 80), deux éléments susceptibles de tourner (93, 94) sont placés l'un à côté de l'autre, et à chacun de ces éléments (93, 94) est associé un ressort de pression (95, 96) ces ressorts sollicitant les deux éléments en sens opposés.

8. Embrayage à friction selon une des revendications 1 à 7, caractérisé en ce que les surfaces obliques (28) sur les éléments susceptibles de tourner (81; 66; 90, 91; 93, 94) ont une inclinaison plus réduite par rapport au plan de rotation que les surfaces obliques (25) de l'anneau de friction (support de lamelles 17, 18).

9. Embrayage à friction selon la revendication 1, caractérisé en ce qu'il comporte des becs (85) faisant saillie radialement sur les éléments susceptibles de tourner et qui, pour permettre le verrouillage lorsque l'embrayage (8) est embrayé, pénètrent dans des gorges axiales (86) du manchon de commande (16), gorges dont la largeur intérieure correspond à la largeur des becs (85).

10. Embrayage à friction selon la revendication 1, caractérisé en ce qu'il comporte des becs (99) faisant saillie sur les éléments susceptibles de tourner et qui, pour permettre le verrouillage lorsque l'embrayage (8) est embrayé, pénètrent dans des gorges axiales (86) du manchon de commande (16), gorges dont la largeur intérieure est beaucoup plus grande que la largeur des becs (99).

## Claims

1. An engageable/disengegeable friction clutch, in particular for gearwheel transmissions, with at least one axially displaceable friction ring (disc carrier 17, 18) which forms part of one clutch half, which cooperates via clutch friction surfaces (67, 68) and discs (21, 22) with the other friction half and which, in order to produce a pressing force dependent upon the torque, bears against oblique surfaces (28) of the shaft (2) to be coupled, by means of oblique surfaces (25) inclined relative to the plane of rotation via rolling members (balls 30), and with a control sleeve (16) axially displaceably mounted on a collar (control sleeve carrier 15) of the shaft (2) to be coupled, the control sleeve (16) and the friction ring (disc carrier 17, 18) interlocking with at least two teeth (44, 45) and associated grooves (42, 43) oriented approximately in the circumferential direction, teeth (44, 45) and grooves (42, 43) being provided with surfaces (35, 46; 36, 47; 40, 48; 41, 49) axially pressing against each other during engagement and disengagement, of which at least the surfaces pressing against each other during disengagement (40, 48; 41, 49) are angled to the plane of rotation in a direction opposite that of the inclined oblique surfaces (25), characterized in that

a) the oblique surfaces (28) on the shaft side are provided on at least one element (81, 66; 90 91; 93; 94) rotatable relative to the shaft (2),

b) the at least one rotatable element (81; 66; 90, 91; 93, 94) is guided in a recess (chamber 80) of the shaft collar (control sleeve carrier 15) and acted upon by means of a spring force (83, 92, 95, 96) acting in the direction of rotation (54) of the shaft (2) and supported directly or indirectly on the shaft collar (control sleeve carrier 15) and can be applied against a stop in the recess (chamber 80),

c) the rolling members (balls 30) are guided between the oblique surfaces (25, 28) in axial bores (82) of the shaft collar (control sleeve carrier 15), and

d) the at least one rotatable element (81 ; 66; 90, 91; 93, 94) is locked in its neutral position during engagement of the clutch and is unlocked during disengagement of the clutch, while the associated friction ring (17, 18) is still in friction engagement.

2. A friction clutch according to Claim 1, characterized in that the rotatable elements are constructed as segments (81; 90, 91; 93, 94) each having at least one oblique surface (28).

3. A friction clutch according to Claim 1, characterized in that at least one rotatable element is a ring part (66) having all the oblique surfaces (28).

4. A friction clutch according to one of Claims 1 to 3, which is constructed as a double friction clutch, characterized in that each rotatable element has two oblique surfaces (28), of which one is associated with one clutch (8A) and the other with the other clutch (8B) respectively.

5. A friction clutch according to Claim 1, which is constructed as a double friction clutch, characterized in that in each recess (chamber 80) there are arranged two elements (81A, 81B; 66) which are rotatable independently of each other and one of which is associated with one (8A) and the other with the other clutch (8B) respectively.

6. A friction clutch according to Claim 5, characterized in that two rotatable elements (segments 90, 91) are arranged in a recess (chamber 80) so as to lie one behind another in the circumferential direction and the spring force of a compression spring (92) arranged between the two rotatable elements (segments 90, 91) is applied.

7. A friction clutch according to Claim 5, characterized in that two rotatable elements (93, 94) are arranged in a recess (chamber 80) so as to lie next to each other and each of these elements (93, 94) has associated with it its own compression spring (95, 96) which acts upon both elements in the opposite direction.

8. A friction clutch according to one of Claims 1 to 7, characterized in that the oblique surfaces (28) on the rotatable elements (81, 66; 90, 91; 93, 94) have a smaller inclination relative to the plane of rotation than the oblique surfaces (25) of the friction ring (disc carrier 17, 18).

9. A friction clutch according to Claim 1, characterized by lugs (85) which project radially on the rotatable elements and which, for the purposes of locking when the clutch (8) is engaged, protrude into axial grooves (86) of the control sleeve (16), the clear width of which corresponds to the width of the lugs (85).

10. A friction clutch according to Claim 1, characterized by lugs (99) which project on the rotatable elements and which, for the purposes of locking when the clutch (8) is engaged, protrude into axial grooves (86) of the control sleeve (16) the clear width of which is considerably greater than the width of the lugs (99).

Fig. 2

Fig.1

EP 0 270 747 B1

Fig. 3

Fig. 4

Fig. 5

EP 0 270 747 B1

Fig. 6

Fig. 7

Fig. 9

Fig. 10

Fig. 8

Fig. 14

## Fig. 11

## Fig.12

## Fig.13